# EUROPÄISCHE PATENTANMELDUNG

(11) **EP 3 862 214 A1**
(43) Veröffentlichungstag der Anmeldung: **11.08.2021**
(21) Anmeldenummer: 21000031.1
(22) Anmeldetag: 01.02.2021
(51) Int. Cl.: B60L 53/14, B60L 53/31, B60L 53/62, B60L 53/63, B60L 53/67, B60L 58/12, B60L 53/60

(54) **VORRICHTUNG ZUM LADEN VON ELEKTROFAHRZEUGEN SOWIE VERFAHREN ZUM BETREIBEN DER VORRICHTUNG**

(30) Priorität: 04.02.2020 DE 102020000726
(71) Anmelder: Erfurt, Christian, 86929 Penzing (DE)
(72) Erfinder: Erfurt, Christian, 86929 Penzing (DE)
(74) Vertreter: Castell, Klaus

(57) **Zusammenfassung**

Eine Vorrichtung zum Laden von Elektrofahrzeugen mit einer Stromschiene und mehreren Ladeboxen, zeichnet sich dadurch aus, dass die Ladeboxen eine Ladeelektronik mit Laderegler und Leistungsmodulen aufweisen, die in die Stromschiene integriert sind.

Bei einem Verfahren zum Betreiben einer derartigen Vorrichtung wird über eine zentrale Steuerung gemessen, auf welcher Phase aktuell die kleinste Leistung anliegt, und das nächste Fahrzeug auf diese Phase aufgeschaltet.

## Beschreibung

Die Erfindung betrifft eine Vorrichtung zum Laden von Elektrofahrzeugen mit einer Stromschiene und mehreren Ladeboxen.

Die Erfindung betrifft insbesondere einen Verbund von Ladestationen für Elektrofahrzeuge für das konduktive Laden mit Wechselspannung (AC) für mehrere Parkplätze, Tiefgaragen oder Parkhäuser.

Es ist bekannt, hierfür über die Ausdehnung aller zu versorgender Parkplätze eine aus der Industrie bekannte Stromschiene anzubringen.

Die Ladeboxen sind für die feste Installation vorgesehen, und können an der Stromschiene überall dort platziert werden wo eine Abgangsmöglichkeit vorhanden ist.

Wenn derartige Systeme für Ladelösungen benutzt werden, wird an einem Serien-Abgangskasten eine handelsübliche Wallbox installiert. Vom Abgangskasten zur Wallbox fallen somit Verkabelungsarbeiten an. Des Weiteren kann eine Schieflastregelung bei einphasiger Ladung nicht realisiert werden.

Der Erfindung liegt die Aufgabe zu Grunde, eine derartige Vorrichtung weiterzuentwickeln. Diese Aufgabe wird mit einer Vorrichtung nach Anspruch 1 und mit einem Verfahren nach Anspruch 9 gelöst. Vorteilhafte Weiterbildungen sind Gegenstand der Unteransprüche.

Erfindungsgemäß ist die notwendige Ladeelektronik (Laderegler, Leistungsmodule) direkt im Serien-Abgangskasten verbaut. Diese ersetzt die zusätzlich zu installierende Wallbox. Die Ladeelektronik kann auch Komponenten zum schieflastreduzierten einphasigem Laden enthalten (Dauerparker, Mitarbeiterparklätze usw.). Der Abgang zum Elektrofahrzeug erfolgt dann über Ladekabel. Hierfür eignen sich übliche Ladeleitungen mit Typ 2 oder Typ 1 Stecker, oder als Typ 2 Steckdose, welche dann abgesetzt montiert werden kann.

Die Kommunikation zur stationären Steuerung kann über die Stromschiene via PLC, via verkabelten LAN oder über ein WLAN erfolgen.

Die Steuerung kann ein Abrechnungssystem beinhalten.

Bei der Ladebox wir vorzugsweise der Neutralleiter nicht geschaltet. Somit ist bei der Anordnung der Schalter in der Ladebox keine gegenseitige Verknüpfung der Schalter notwendig Die Schalter sind vorzugsweise nicht parallel zu L1, L2 und L3 sondern seriell geführt.

Verfahrensmäßig ist vorgesehen, dass über eine zentrale Steuerung gemessen wird, auf welcher Phase gerade die kleinste Leistung anliegt. Für diese Messung können auch die Zähler der installierten Ladeboxen herangezogen werden.

Dem nächsten Ladekunden wird dann diese Phase aufgeschaltet. Sein Fahrzeug beginnt dann auf dieser Phase zu laden. Sofern Ladevorgänge abgeschlossen sind, und sich Phasenleistungen verschieben, wird dies von der zentralen Steuerung geregelt. Es erfolgt beispielsweise ein kurzes Beenden des Ladevorgangs, eine Phasenumschaltung und ein erneuter Start der Ladung.

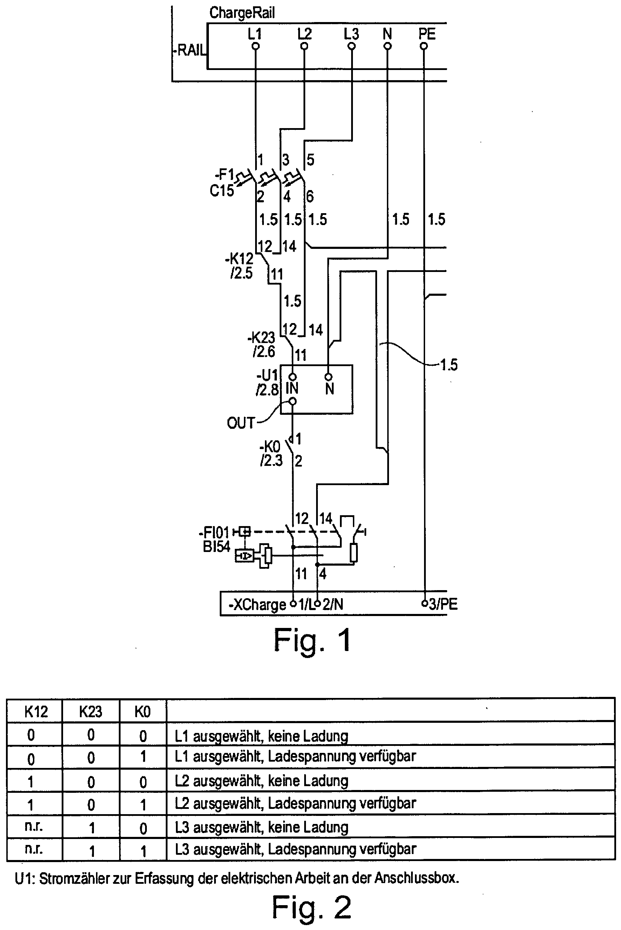

Ein Ausführungsbeispiel ist in der Zeichnung dargestellt und wird im Folgenden näher beschrieben. Es zeigt
- Figur 1: die Schaltmatrix für eine Ladebox,
- Figur 2: ein Schema zur Verteilung der Phasen auf Ladeboxen,

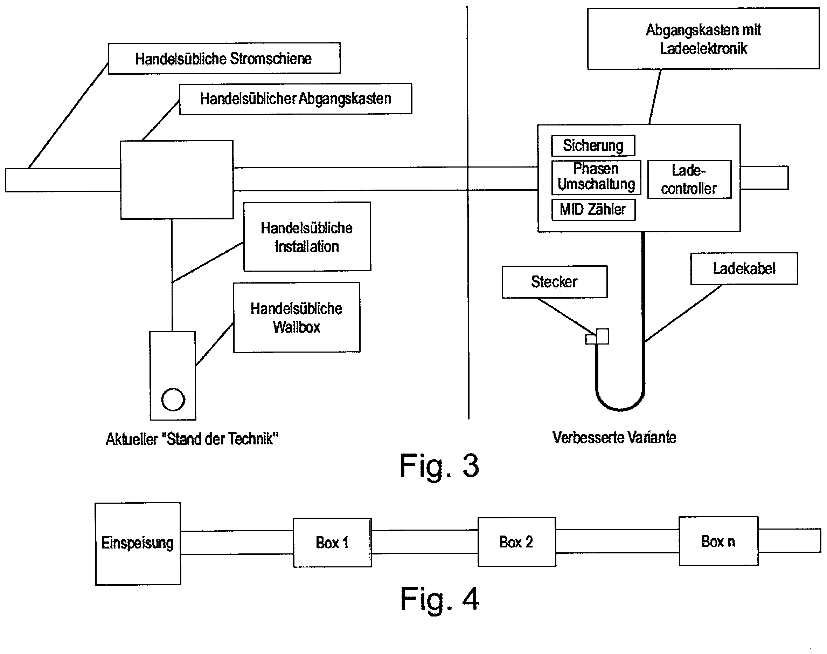

- Figur 3: eine Gegenüberstellung von herkömmlicher und erfindungsgemäßer Lösung und
- Figur 4: schematisch ein Gesamtsystem zur Einspeisung mit Schienencontroller.

Eine Ladebox mit den Komponenten wird auf eine handelsübliche Stromschiene aufgesetzt und kontaktiert. Der Fahrzeuganschluss erfolgt direkt an die Ladebox mittels Kabel oder Steckdose, ohne Zwischeninstallation.

Der Abgangskasten kann alternativ auch mit einer Ladeelektronik für 3-phasiges Laden mit 11 oder 22 kW ausgerüstet werden, allerdings erfolgt in diesen Kästen dann kein Phasenausgleich, jedoch kann zur Leistungsreduzierung eine Phasenabschaltung stattfinden.

In der Steuerung der Phasenfolgen wird berücksichtigt, dass maximal 3,7 kW Schieflast pro Phase entstehen.

Vorteilhaft ist eine Fahrzeugkommunikation über Powerline. Die ChargeRailBox kann die Kommunikation zwischen Fahrzeug und Ladesäule unterstützen. In diesem Falle sind Informationen über das angeschlossene Fahrzeug verfügbar (SoC des Akkus, Ladeanforderung usw.). Diese Informationen werden verwendet, um die Ladeleistungen auf der Schiene zu regulieren - sofern Fahrzeuge dies entsprechend unterstützen.

Über einen integrierten RFID Reader, der ggf. auch abgesetzt montiert werden kann, sowie über die Powerline Kommunikation zum Fahrzeug kann optional auch eine Nutzeridentifikation stattfinden.

## Patentansprüche

1. Vorrichtung zum Laden von Elektrofahrzeugen mit einer Stromschiene und mehreren Ladeboxen, ***dadurch gekennzeichnet, dass*** die Ladeboxen eine Ladeelektronik mit Laderegler und Leistungsmodulen aufweist, die in die Stromschiene integriert sind.

2. Vorrichtung nach einem der vorhergehenden Ansprüche, ***dadurch gekennzeichnet, dass*** die Ladeelektronik Komponenten zum schieflastreduzierten einphasigen Laden aufweist.

3. Vorrichtung nach einem der vorhergehenden Ansprüche, ***dadurch gekennzeichnet, dass*** die Vorrichtung Ladekabel zu Verbindung der Ladeboxen mit dem Elektrofahrzeug aufweist.

4. Vorrichtung nach einem der vorhergehenden Ansprüche, ***dadurch gekennzeichnet, dass*** die Vorrichtung eine zentrale Steuerung aufweist.

5. Vorrichtung nach Anspruch 4, ***dadurch gekennzeichnet, dass*** die zentrale Steuerung mit den Ladeboxen über die Stromschiene, eine speicherprogrammierbare Steuerung (PLC), verkabeltem LAN oder über WLAN in Verbindung steht.

6. Vorrichtung nach Anspruch 4 oder 5, ***dadurch gekennzeichnet, dass*** die zentrale Steuerung eine Abrechnungseinrichtung für die über eine der Ladeboxen bereitgestellte elektrische Arbeit aufweist.

7. Vorrichtung nach einem der Ansprüche 4 bis 6, ***dadurch gekennzeichnet, dass*** die zentrale Steuerung, die Stromschiene und die Ladeboxen stationär angeordnet sind.

8. Vorrichtung nach einem der vorhergehenden Ansprüche, ***dadurch gekennzeichnet, dass*** die Ladeboxen Schalter aufweisen, die seriell geführt sind.

9. Verfahren zum Betreiben einer Vorrichtung nach einem der vorhergehenden Ansprüche, ***dadurch gekennzeichnet, dass*** über eine zentrale Steuerung gemessen wird, auf welcher Phase aktuell die kleinste Leistung anliegt, und das nächste Fahrzeug auf diese Phase aufgeschaltet wird.

10. Verfahren nach Anspruch 9, ***dadurch gekennzeichnet, dass*** die zentrale Steuerung mit dem zu ladenden Fahrzeug kommuniziert, um den aktuellen Ladezustand des Fahrzeugs zu erfassen und bei der Verteilung des Stroms über die Stromschiene diesen Ladezustand zu berücksichtigen.
